# FASCICULE DE BREVET EUROPEEN

(11) **EP 0 349 771 B1**
(45) Date de publication et mention de la délivrance du brevet: **18.08.1993**
(21) Numéro de dépôt: 89110066.1
(22) Date de dépôt: 03.06.1989
(51) Int. Cl.: G01T 1/11, G01T 5/10

(54) **Détecteur passif de rayonnement**
Passiv-Strahlungsdetektor
Passive radiation detector

(30) Priorité: 06.07.1988 FR 8809429
(43) Date de publication de la demande: 10.01.1990
(73) Titulaire: EASTMAN KODAK COMPANY (a New Jersey corporation), Rochester, New York 14650 (US); KODAK-PATHE, F-75594 Paris Cedex 12 (FR)
(72) Inventeur: Andru, Jean, Antoine, Alphonse, F-71102 Chalon Sur Saône Cedex (FR)
(74) Mandataire: Buff, Michel

(56) Documents cités:
- EP-A- 0 038 112
- FR-A- 2 032 411
- US-A- 4 465 936

## Description

La présente invention concerne la détection de rayonnements ou radiations de toute nature et, plus particulièrement, les moyens mis en oeuvre pour en apprécier l'importance et, en conséquence, l'incidence dans la vie courante.

L'objet de l'invention est, plus particulièrement, orienté vers la détection de rayonnements **alpha**, de provenance naturelle ou artificielle susceptibles d'être imposés en dehors de locaux ou sites à risques, tels que certains locaux industriels dans lesquels une génération de tels rayonnements peut découler de la présence de matériaux ou de la mise en oeuvre de procédés divers.

L'objet de l'invention vise, plus particulièrement, un détecteur susceptible d'être utilisé à titre personnel et/ou domestique, pour évaluer la présence et/ou l'importance de rayonnements imposés aux êtres humains ou animaux au cours de leurs déplacements, de leurs séjours ou des activités habituelles de la vie courante.

Dans le domaine d'application ci-dessus, différentes propositions de détecteur ont déjà été formulées.

Il est possible de distinguer une famille de détecteurs, du type actif, telle que la proposition formulée par le brevet **US 3 922 555**. Dans un tel principe, le détecteur possède un organe moteur capable de créer une circulation d'une veine fluide, depuis un milieu extérieur en direction d'une cartouche de détection.

L'art antérieur a également proposé une seconde famille concernant des détecteurs passifs comportant un support sur lequel est adapté un élément sensible qui est exposé à une source de rayonnement virtuel ou potentiel.

Dans ce type de famille, il est possible de citer la proposition selon le brevet **US 4 338 523** concernant une pochette déchirable contenant un élément sensible pouvant être exposé au travers d'une fenêtre.

Une telle proposition, intéressante dans son principe même, possède certains inconvénients tenant, principalement, à sa fragilité structurelle et à la difficulté d'éviter, lors des stockages, des transports ou même de l'exposition, un risque de pollution de l'élément sensible incapable de fournir, en conséquence, une image réelle et précise du rayonnement qu'il a subi.

Il est également possible de citer l'enseignement selon le brevet US 3 783 292 qui décrit, simplement, un dispositif de support et d'exposition d'un élément sensible. Dans cette structure, aucune disposition n'est prévue pour assurer le stockage avec intégrité de l'élément sensible pendant une durée plus ou moins longue, ainsi qu'une possibilité de transfert ou de transport de l'élément sensible entre un site d'utilisation et un site d'examen, d'analyse ou de mesure.

Les brevets FR 2 032 411 et US 4 465 936 décrivent chacun un détecteur passif de rayonnement, du type fermé, et ne suggèrent rien quant à des moyens éventuels pour maintenir le couvercle ouvert, de manière à permettre une exposition en position d'ouverture.

Il convient de citer, également, l'enseignement de la demande EP-A-0 108 956 préconisant un détecteur passif, du type fermé, comprenant un boîter constitué par une embase associée à un couvercle et destiné à supporter un élément sensible devant être exposé.

La structure préconisée se caractérisé par un encombrement relatif certain et par des difficultés de stockage et de transport en raison de sa forme.

Il convient, par ailleurs, de remarquer que l'élément sensible doit être inséré ou extrait manuellement du boîtier formé par l'embase et le couvercle. L'utilisateur est ainsi astreint à des manipulations de chargement et de déchargement, mais aussi d'emballage, lorsqu'il convient d'assurer, sans risque de pollution, le transport de l'échantillon en direction d'un laboratoire d'analyse.

Toutes ces manipulations représentent des risques de pollution de l'échantillon ou de l'élément sensible qui n'est, ainsi, plus à même de fournir une indication précise sur le rayonnement qui lui a été imposé.

La mise en oeuvre d'un tel détecteur implique, par ailleurs, pour l'utilisateur, de disposer d'un moyen de transfert en direction d'un laboratoire pour assurer l'acheminement de l'élément sensible exposé.

Au total donc, la mise en oeuvre d'un tel détecteur se traduit par une sujétion notable pour l'utilisateur qui a, généralement, tendance à négliger le recours à un tel détecteur pour apprécier l'équilibre écologique de son environnement.

La présente invention vise à proposer un nouveau détecteur de rayonnement passif, mais de type ouvert, particulièrement conçu pour surmonter les inconvénients ci-dessus et constituer un appareil de faible encombrement, capable d'assurer une protection efficace de l'élément sensible pendant les périodes de non utilisation effective suivant la fabrication, c'est-à-dire le stockage, le transport ou la distribution.

Un autre objet de la proposition selon l'invention est de fournir un détecteur passif de rayonnement capable d'assumer, par lui-même, une première fonction de protection d'un élément sensible et l'exposition de cet élément en période d'utilisation selon une position stable dans le temps et une orientation éventuellement réglable, sans astreindre l'utilisateur à mettre en oeuvre des moyens spécifiques dans de tels buts.

Un autre objet de l'invention est de proposer un détecteur passif de rayonnement présentant l'avantage de permettre à l'utilisateur l'envoi ou l'acheminement direct, en toute sécurité, de l'élément sensible vers un laboratoire de traitement ou de mesure, sans risque de pollution et de dégradation à même d'altérer les signes d'activation qu'il porte, par suite de l'exposition subie.

Un autre objet de l'invention est de proposer un détecteur passif d'un faible prix de revient, permettant une fabrication unitaire, en grande série, d'un article à usage unique.

Pour atteindre les objectifs ci-dessus, le détecteur passif selon l'invention comprend un boîtier (1) formé par une embase (2) pourvue d'un couvercle (6) et supportant un substrat amovible (28) revêtu, sur une face au moins, d'une couche (29) sensible au rayonnement à détecter, l'embase (2) délimitant un logement (5) de réception du couvercle en position de fermeture, ledit logement comportant des moyens (11, 14) de liaison articulée du couvercle ainsi que des moyens d'immobilisation (20, 26, 27) assurant l'immobilisation du couvercle en position d'ouverture, ledit couvercle comportant sur sa face interne des moyens assurant le maintien du substrat et son exposition en position d'ouverture, ledit détecteur étant caractérisé en ce que les moyens de liaison articulée et les moyens d'immobilisation comprennent des tourillons (11) d'articulation formés au voisinage du pied (10) et destinés à coopérer avec des paliers (14) disposés de manière à conférer au couvercle une position d'ouverture inclinée selon un angle supérieur à 90° par rapport à l'embase, lesdits paliers (14) étant formés par des rainures oblongues (15) de direction sensiblement verticale en position d'ouverture et alignés avec le plan vertical médian d'un dégagement (16) ménagé dans le fond du logement pour permettre l'emboitement du pied (10) du couvercle en position d'ouverture.

Diverses autres caractéristiques ressortent de la description faite ci-dessous en référence aux dessins annexés qui montrent à titre d'exemples non limitatifs, des formes de réalisation de l'objet de l'invention.

La fig. 1 est une perspective illustrant le détecteur passif de rayonnement dans une position caractéristique d'utilisation.

La fig. 2 est une perspective, en partie arrachée, représentant, sous une forme éclatée, certains des éléments constitutifs de l'objet de l'invention.

Les fig. 3 et 4 sont des coupes transversales partielles illustrant deux positions caractéristiques concernant différents moyens techniques de l'objet de l'invention.

La fig. 5 est une perspective illustrant un autre élément constitutif de l'objet de l'invention.

La fig. 6 est une perspective montrant une variante de réalisation de l'un des éléments constitutifs de l'invention.

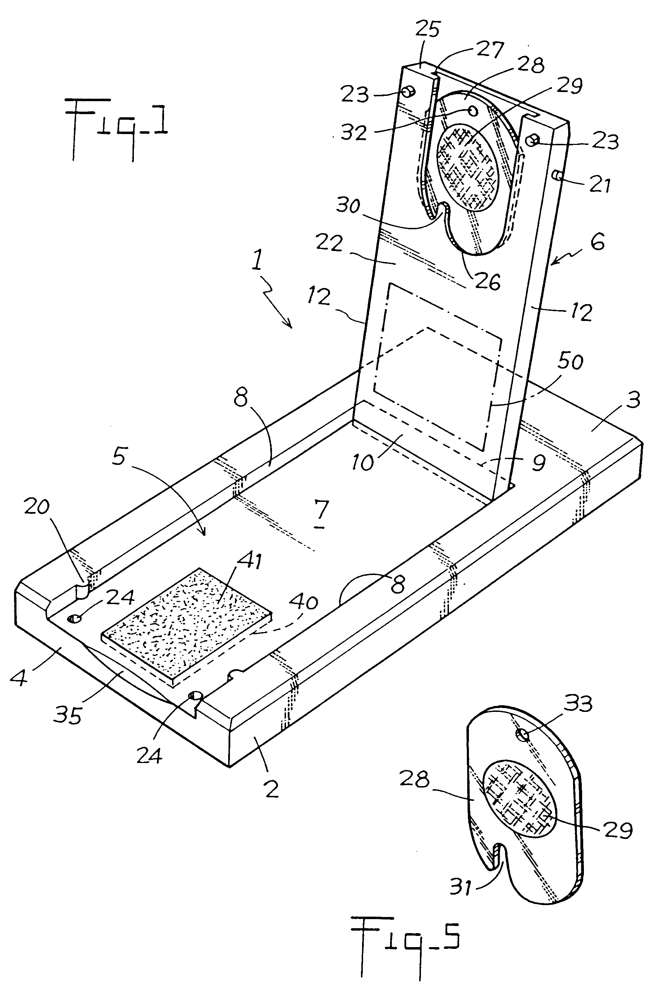

Selon le premier exemple de réalisation, illustré par la fig. 1, le détecteur passif de rayonnement ou de radiation est constitué sous la forme d'un boîter plat 1 présentant en plan, dans cet exemple, une forme carrée ou rectangulaire. Il doit, bien entendu, être considéré que cette forme en plan n'est pas limitative et que le boîtier pourrait affecter d'autres présentations, telles qu'une forme en plan circulaire, polygonale et régulière ou irrégulière.

Le boîtier 1 comprend une embase 2, de préférence mais non exclusivement, réalisée en une matière plastique choisie en fonction de sa compatibilité avec le rayonnement devant être détecté. Le choix de cette matière première, qu'elle soit synthétique ou naturelle, dépend donc, uniquement, de l'application visée et n'entre pas directement dans l'objet de l'invention, étant donné qu'un tel choix peut être considéré comme relevant de la technique à la portée de l'homme de l'art considéré.

L'embase **2** délimite, à partir de sa surface supérieure **3** et de l'un de ses côtés, tel que **4**, lorsqu'elle est polygonale en plan, un logement **5** destiné à recevoir un couvercle **6**. La forme du logement **5** est complémentaire au couvercle **6** et, à titre d'exemple, revêt une forme d'empreinte en creux, parallélépipédique, comportant un fond **7**, deux côtés longitudinaux **8** parallèles entre eux et un coté transversal **9**, de préférence parallèle au bord **4** au niveau duquel le logement **5** s'ouvre. Le couvercle **6** possède, en conséquence, une forme complémentaire et se présente sous l'aspect d'une plaquette dont les dimensions et l'épaisseur sont déterminées, au jeu près, pour qu'un tel couvercle puisse être emboîté totalement dans le logement **5**. De même que précédemment, le logement **5** et le couvercle **6** pourraient affecter en plan, voire en volume, toute autre conformation jugée acceptable pour la fonction devant être assumée.

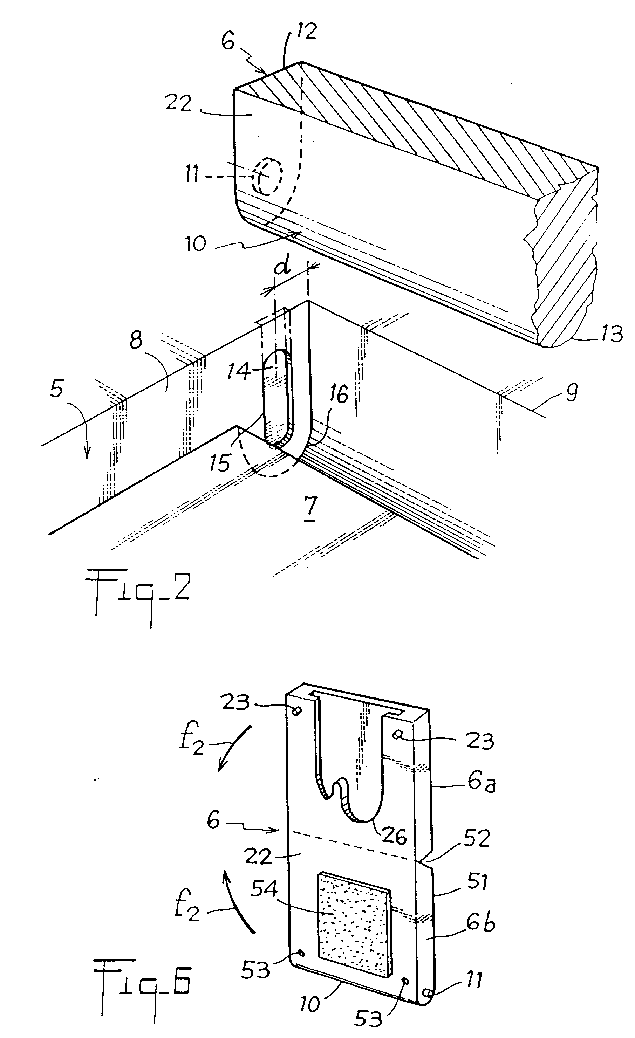

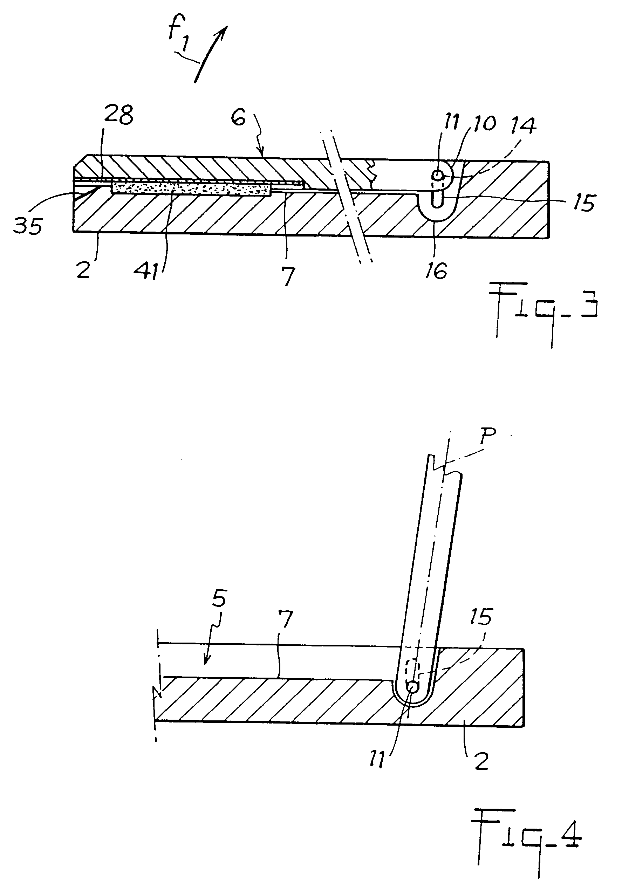

Le couvercle **6** possède, au voisinage de son pied **10**, des moyens aptes à coopérer avec des moyens complémentaires présentés par le logement **5** pour assurer une liaison articulée du couvercle **6** sur l'embase **2**. La liaison articulée doit permettre au couvercle d'occuper, d'une part, soit une position de fermeture, telle qu'illustrée par la **fig. 3**, dans laquelle il est disposé entièrement dans le logement **5**, soit une position d'ouverture, telle qu'illustrée par la **fig. 4** et, d'autre part, une immobilisation stable dans cette position d'ouverture.

Les moyens de liaison articulée, tels qu'illustrés en exemple à la **fig. 2**, comprennent, tout d'abord, des tourillons **11** qui sont formés en saillie à partir des côtés longitudinaux **12** du couvercle **6**. Ces tourillons **11**, ménagés de façon coaxiale, sont, également, concentriques à une conformation semi-cylindrique **13** conférée au pied **10**. Les moyens de liaison articulée comprennent, par ailleurs, à proximité du côté transversal **9** et dans les bords longitudinaux **8** du logement **5**, des paliers **14**, aptes à recevoir les tourillons **11** par simple déformation élastique. Il pourrait, toutefois, être envisagé de prolonger les paliers, comme cela est représenté en trait mixte, de manière à les faire déboucher sur la surface supérieure **3**, en vue de faciliter l'insertion des tourillons **11** pour le montage du couvercle **6**.

Les tourillons **11** et les paliers **14** délimitent, de cette manière, un axe géométrique d'articulation, permettant de faire passer le couvercle **6** de la position selon la **fig. 3** à la position selon la **fig. 4** et inversement.

De préférence, les moyens de liaison articulée, prévus selon l'invention, doivent aussi être à même d'assurer une liaison articulée démontable, afin de permettre la séparation aisée et pratique du couvercle **10** par rapport à l'embase **2**, pour des raisons qui ressortent de ce qui suit.

Les moyens, aptes à assurer l'immobilisation du couvercle **6** dans une position stable d'ouverture, peuvent faire intervenir, entre l'axe des paliers **14** et le coté **9**, une distance **d** supérieure à l'épaisseur du couvercle **6**, de manière, qu'après pivotement, en direction de la position d'ouverture selon la **fig. 4**, celle-ci soit atteinte par butée et appui contre le coté **9** selon une inclinaison supérieure à 90^{o}, si l'on prend en considération le plan de la face supérieure **3** avec le plan médian, tel que **P**, du couvercle **6**.

Ces moyens peuvent aussi prendre la forme de bossages ou bourrelets déformables destinés à coopérer avec l'embase **2** pour éviter une fermeture accidentelle du couvercle **6**. On peut, par exemple, disposer, sur les côtés longitudinaux **12** du couvercle au voisinage de l'articulation, des bossages analogues aux ergots **21**. Ces bossages, coopérant avec le dessus **3** et le bord **8** de l'embase **2**, offriront une résistance à la fermeture accidentelle du couvercle **6**.

D'autres moyens techniques peuvent être retenus pour atteindre le même objectif. Selon les **fig. 2 à 4**, de tels moyens peuvent consister en la réalisation des paliers **14** sous la forme de rainures oblongues **15** aboutissant, par leur conformation semi-cylindrique inférieure, de façon coaxiale à un dégagement semi-cylindrique 1**6** d'emboîtement ménagé dans le prolongement du côté **9**, à partir du fond **7** du logement **5**.

De tels moyens permettent de maintenir le couvercle **6** dans la position de fermeture selon la **fig. 3** et de contribuer à l'immobilisation en position d'ouverture selon la **fig. 4** après ouverture et pivotement sur l'axe défini par les tourillons **11**.

En effet, au fur et à mesure de l'ouverture pivotante, dans le sens de la flèche **f₁**, le couvercle **6** tourne, par les tourillons, dans les paliers **14** et glisse, simultanément, dans les rainures oblongues **15** qui conduisent le pied **10** en emboîtement dans le dégagement **16**. Dans cette position, le couvercle **6** peut ou non prendre appui sur le bord **9** pour occuper une position stable correspondant à une ouverture angulaire voisine de 90^{o}.

Des moyens d'immobilisation du couvercle **6**, dans la position de fermeture selon la **fig. 3**, sont prévus entre ce couvercle et le logement **5**. De tels moyens peuvent, par exemple, être constitués sous la forme de bossages **20** saillant à partir des bords longitudinaux **8** du logement **5**, de manière à coopérer avec les côtés longitudinaux **12** du couvercle **6**. Il peut aussi être prévu de remplacer les bossages **20** par des ergots **21** formés en saillie par les bords longitudinaux **12**. Il peut, également, être envisagé de faire venir de moulage sur la face **22** du couvercle **6**, dite interne par référence à la position de fermeture selon la **fig. 3**, des saillies **23** destinées à s'encliqueter par pression dans des trous **24** s'ouvrant à partir du fond **7** du logement **5**.

Le couvercle **6** présente, à partir de sa face inférieure **22** et de son bord transversal de tête **25**, une fenêtre d'exposition **26** combinée à une glissière **27** aménagée dans l'épaisseur du couvercle **6**. La fenêtre d'exposition **26** et la glissière **27** sont destinées à l'insertion et à la présentation d'un élément sensible **28** qui peut être réalisé de différentes façons convenables et possibles, en fonction du rayonnement ou de la radiation devant être détecté. A titre d'exemple, l'élément sensible peut être constitué sous la forme d'un substrat, tel qu'un film, dont l'une des faces porte une couche sensible **29** dont la composition est choisie en fonction du rayonnement ou de la radiation à détecter.

L'élément sensible **28** peut ainsi être inséré par glissement à l'intérieur de la glissière **27**, jusqu'au fond de cette dernière, de telle sorte que la couche sensible **29** soit apparente par la fenêtre **26** qui permet son exposition.

Dans le cas où l'élément sensible **28** ne possède qu'une face active, il est avantageux de prévoir, dans la conformation de la fenêtre **26**, un ergot ou analogue **30** de détrompage, décalé par rapport à l'axe médian longitudinal de la fenêtre pour coopérer avec une encoche **31** complémentaire, ménagée à partir du bord périphérique de l'élément sensible **28 (fig. 5)**. De tels moyens n'autorisent qu'une seule orientation de présentation et assurent que la couche sensible **29** sera toujours convenablement orientée face à la fenêtre **26** en direction de la face interne **22**.

Pour assurer l'immobilisation correcte de l'élément sensible **28**, il peut être prévu de faire comporter, au fond de la glissière **27**, un ergot ou analogue **32** ménagé à proximité du bord de tête **25** pour coopérer avec une perforation **33** présentée par le substrat **28**.

Dans la position de fermeture du couvercle **6**, telle qu'illustrée par la **fig. 3**, l'élément sensible **28** est orienté en regard du fond **7** du logement **5** et se trouve ainsi soustrait aux rayonnements ou radiations divers susceptibles de l'atteindre. Le détecteur passif selon l'invention occupe une position de stockage ou de transport, dans laquelle il est maintenu dans un état d'inactivation.

Lorsqu'il convient de placer le détecteur passif dans un état d'utilisation, il suffit d'ouvrir le couvercle dans le sens de la flèche **f₁** pour le faire pivoter sur les tourillons ou analogues **11**. L'ouverture du couvercle est facilitée en prévoyant, dans le bord transversal **4** un onglet **35** facilitant la prise en charge du bord de tête **25**.

Après ouverture du couvercle **6** jusque dans la position d'immobilisation stable d'ouverture, telle qu'illustrée par la **fig. 4**, la couche sensible **29** est apparente par la fenêtre **26** et peut ainsi être directement exposée au rayonnement ou à la radiation devant être détecté. Dans cet état, le couvercle **6** et l'embase **2** assument une fonction de présentoir stable, maintenant l'élément sensible **28** dans un état favorable à l'exposition au rayonnement ou à la radiation.

Après le temps nécessaire d'exposition, le couvercle **6** peut être détaché de l'embase **1** et être inséré dans une pochette de matière plastique favorisant son transport ou son acheminement vers un laboratoire de révélation ou de traitement. Il doit être remarqué que cette pochette peut faire l'objet d'un acheminement postal aisé, en raison de la dimension modeste du couvercle **6** et de son faible poids autorisant un affranchissement minimal.

Cette faculté de détachement permet de soustraire l'utilisateur à l'obligation de désinsérer l'élément sensible **28** pour assurer son acheminement et, par conséquent, évite tout risque de dégradation ou de pollution de la couche sensible **29**, préalablement à son traitement.

La structure particulière du détecteur permet une réalisation en grande série, en matière plastique, par moulage par injection, conduisant à un faible coût unitaire. Il devient ainsi possible de réaliser le détecteur sous la forme d'un appareil de détection à usage unique, libérant l'utilisateur de toute contrainte et difficulté de déchargement et de rechargement de l'élément sensible **28**.

La **fig. 1** montre qu'il est particulièrement avantageux de ménager, dans le fond **7** du logement **5**, une cavité **40** destinée à recevoir un tampon **41** de matière souple, de préférence du type mousse, plus spécialement à cellules fermées. Le tampon **41** présente des dimensions compatibles avec la fenêtre d'exposition **26**, se trouve localisé par la position de la cavité **40**, en correspondance de la fenêtre **26**, dans la position de fermeture du couvercle **6** et présente une très légère surépaisseur par rapport au fond **7**. Ainsi, comme cela ressort de la **fig. 3**, dans la position de fermeture du couvercle **6**, l'élément sensible **28** est appliqué sur le tampon **41** qui en assure la protection contre les agressions mécaniques, chimiques ou le ou les rayonnements qui seraient susceptibles d'altérer ou de polluer la couche sensible **29** pendant les phases de transport, de manipulation ou, encore, lors du stockage en magasin.

La **fig. 1** montre qu'il est également avantageux de ménager, sur la face interne **22** du couvercle **6**, une plage **50** réservée à l'apposition de signes ou indications de marquage et d'identification, soit du détecteur en tant que tel, soit des caractéristiques de l'élément sensible, telles que composition, sensibilité, etc. Cette plage **50** peut être réservée de toute façon convenable pour permettre un marquage direct ou, encore, pour recevoir un support amovible, par exemple adhésif, susceptible d'être rapporté en cas de besoin.

La **fig. 6** montre une variante de réalisation dans laquelle il est prévu de réaliser le couvercle **6** pour lui faire comporter, à partir de sa surface extérieure **51**, une zone transversale médiane de pliage **52**. Une telle zone divise le couvercle **6** en deux parties **6a** et **6b** qui peuvent être repliées l'une sur l'autre par pivotement, dans le sens des flèches **f₂**, autour de la ligne d'articulation définie par la zone **52**. Dans un tel cas, les ergots **23** peuvent alors coopérer avec des trous **53** qui sont ménagés en correspondance dans la partie **6b** au voisinage du pied **10**.

Cette disposition permet de refermer et replier sur lui-même le couvercle **6**, pour assurer la protection de la couche sensible **29** lors des transports, acheminements ou transmissions en direction de laboratoires de traitement.

Dans un tel cas de réalisation, il est également avantageux de prévoir, dans la face interne **22**, une cavité apte à recevoir un tampon protecteur **54**, du même type que le tampon **41**. Un tel tampon occupe une position symétrique par rapport à la fenêtre **26**, en considération de la zone de pliage **52** et possède des dimensions compatibles avec son insertion partielle dans la fenêtre **26**.

L'objet de l'invention trouve, à titre d'exemple, une application avantageuse dans le contrôle de l'environnement ou du volume utile des locaux d'habitation.

L'invention n'est pas limitée aux exemples décrits et représentés, car diverses modifications peuvent y être apportées sans sortir du cadre défini par les revendications.

## Revendications

1. Détecteur passif de rayonnement du type comprenant un boîtier (1) formé par une embase (2) pourvue d'un couvercle (6) et supportant un substrat amovible (28) revêtu, sur une face au moins, d'une couche (29) sensible au rayonnement à détecter, l'embase (2) délimitant un logement (5) de réception du couvercle en position de fermeture, ledit logement comportant des moyens (11, 14) de liaison articulée du couvercle ainsi que des moyens (20, 26, 27) assurant l'immobilisation du couvercle en position d'ouverture, ledit couvercle comportant sur sa face interne des moyens assurant le maintien du substrat et son exposition en position d'ouverture, ledit détecteur étant caractérisé en ce que les moyens de liaison articulée et les moyens d'immobilisation comprennent des tourillons (11) d'articulation formés au voisinage du pied (10) et destinés à coopérer avec des paliers (14) disposés de manière à conférer au couvercle une position d'ouverture inclinée selon un angle supérieur à 90° par rapport à l'embase, lesdits paliers (14) étant formés par des rainures oblongues (15) de direction sensiblement verticale en position d'ouverture et alignées avec le plan vertical médian d'un dégagement (16) ménagé dans le fond du logement pour permettre l'emboitement du pied (10) du couvercle en position d'ouverture.

2. Détecteur passif de rayonnement selon la revendication 1 caractérisé en ce que les tourillons sont disposés sur les côtés longitudinaux (13) du couvercle, lesdits paliers étant ménagés dans les bords en regard (8) du logement (5) à une distance (d) du bord transversal correspondant du logement choisie pour conférer au couvercle une position d'ouverture inclinée selon un angle supérieur à 90° par rapport à l'embase.

3. Détecteur passif de rayonnement selon la revendication 2, caractérisé en ce que ledit pied (10) ainsi que le dégagement (16) présentent une conformation semi-cylindrique, la partie inférieure, également semi-cylindrique, desdites rainures oblongues étant coaxiale audit dégagement.

4. Détecteur passif de rayonnement selon les revendications 1 à 3, caractérisé en ce que le fond (7) du logement porte un tampon (41) en matière souple sur lequel le substrat est appliqué en position fermée du couvercle.

5. Détecteur passif de rayonnement selon l'une quelconque des revendications précédentes, caractérisé en ce que les moyens, assurant le maintien de l'exposition du substrat, comprennent une glissière (27) d'insertion ménagée en relation avec une fenêtre d'exposition (26) s'ouvrant sur la face interne (22) du couvercle.

6. Détecteur passif de rayonnement selon l'une quelconque des revendications précédentes, caractérisé en ce que les moyens de maintien et d'exposition comportent au moins un organe de détrompage (30).

7. Détecteur passif de rayonnement selon l'une quelconque des revendications précédentes, caractérisé en ce que des moyens d'immobilisation en position fermée sont prévus entre le couvercle et le logement de l'embase.

8. Détecteur passif de rayonnement selon l'une quelconque des revendications précédentes, caractérisé en ce que le couvercle comporte :
- une zone (52) de pliage transversale définissant deux parties sensiblement égales pouvant être repliées l'une sur l'autre de manière à renfermer ladite couche sensible ;
- un tampon souple (54) porté par la face interne (22), de façon symétrique audit substrat amovible par rapport à la ligne de pliage, et
- des moyens de verrouillage (23, 53) permettant de maintenir repliées sur elles-mêmes les deux parties (6a-6b).

9. Détecteur passif de rayonnement selon l'une quelconque des revendications précédentes, caractérisé en ce que la face interne du couvercle comporte une plage (50) de marquage et d'identification.

## Claims

1. A passive radiation detector comprising a box (1) formed by a base (2) provided with a lid (6) and supporting a removable substrate (28) coated, on at least one face, with a layer (29) sensitive to the radiation to be detected wherein :
the base (2) defining a housing (5) for receiving the lid in closed position,
the housing comprising means (11, 14) for articulated connection of the lid and means (20, 26, 27) for immobilizing this lid in open position,
and the lid comprising, on its inner fade (22) in closed position, means (26, 27) ensuring holding of the substrate and exposure thereof in open position of said lid,
said detector being characterized in that said articulating connection means and said immobilization means comprise pivoting journals (11) formed at the foot (10) of the lid and adapted to cooperate with bearings (14) adapted to give the lid an open position at an angle greater than 90° with respect to the base, said bearings being formed by oblong grooves (15) of vertical direction aligned with the median vertical plane of a clearance (16) made in the bottom of the housing to allow fit of the foot (10) of the lid in open position.

2. A passive radiation detector according to claim 1, characterized in that the pivoting journals are provided on the longitudinal edges (12) of the lid and the bearings are made in the opposite edges (8) of the housing (5) at a distance (d) from the corresponding transverse edge of the housing in order to give the lid an open position at an angle greater than 90° with respect to the base.

3. A passive radiation detector according to claim 2, characterized in that said foot (10) as well as said clearance (16) have a semi-cylindrical configuration, the lower part of said oblong grooves, also semi-cylindrical, being coaxially arranged to said clearance.

4. The radiation detector according to any of claims 1 to 3 wherein the bottom (7) of the housing bears a pad (41) on which the substrate is applied when the lid is in closed position.

5. The radiation detector according anyone of claims 1 to 4 wherein the means ensuring holding and exposure of the substrate comprise a slideway (27) for insertion made in relation with an exposure window (26) opening on the inner face (22) of the lid.

6. The radiation detector according to anyone of claims 1 to 5 wherein the holding and exposure means comprise at least one polarization member (30).

7. The radiation detector according to anyone of claims 1 to 6 wherein means for immobilization in closed position are provided between the lid and the housing in the base.

8. The radiation detector according to anyone of claims 1 to 7 wherein the lid comprises :
a transverse zone of fold (52) defining two parts substantially equal which can be folded one over the other so as to enclose said sensitive layer,
a pad (54) borne by inner face (22) symmetrically to the removable substrate with respect to the line of fold, and
means (23, 53) for locking the two parts of the lid in closed position, when folded one over the other.

9. The radiation detector according to anyone of claims 1 to 8 wherein the inner face of the lid comprises an area (50) for marking and identification.

## Patentansprüche

1. Passivstrahlungsdetektor mit einem Behältnis (1), das durch ein mit einem Deckel (6) versehenes Unterteil (2) gebildet ist und ein entnehmbares Substrat (28) enthält, welches auf mindestens einer Seite mit einer Schicht (29) überzogen ist, die für die nachzuweisende Strahlung empfindlich ist, wobei das Unterteil ein Gehäuse (5) zur Aufnahme des Deckels in dessen Schließlage bildet, das Gehäuse Mittel (11, 14) zum Anlenken des Deckels und Mittel (20) zur Festlegung des Deckels in dessen Schließlage aufweist, und wobei der Deckel auf seiner Innenseite (22) Mittel (26, 27) aufweist, die den festen Sitz des Substrats und dessen Strahlenexponierung in der Offenlage des Deckels gewährleisten, dadurch gekennzeichnet, daß die Deckelanlenk- und -festlegungsmittel als am Fußteil (10) des Deckels angeformte Drehzapfen (11) aufweisen, welche mit Lagerstellen (14) zusammenwirken, die dem Deckel einen Öffnungswinkel vom mehr als 90° gegenüber dem Unterteil ermöglichen, wobei die Lagerstellen durch längliche Nuten (15) gebildet sind, die mittig zur Ebene einer sich senkrecht erstreckten Freisparung (16) verlaufen, die im Boden des Gehäuses für die Aufnahme des Fußteils (10) des Deckels in dessen Offenlage vorgesehen ist.

2. Passivstrahlungsdetektor nach Anspruch 1, dadurch gekennzeichnet, daß die Drehzapfen an den Längskanten (12) des Deckels angeordnet und die Lagerstellen an den gegenüberliegenden Flächen (8) des Gehäuses (5) in einem Abstand (d) von der benachbarten querverlaufenden Gehäusefläche ausgebildet sind, so daß dem Deckel ein Öffnungswinkel von mehr als 90° ermöglicht wird.

3. Passivstrahlungsdetektor nach Anspruch 2, dadurch gekennzeichnet, daß sowohl das Fußteil (10) als auch die Freisparung (16) halbzylindrisch ausgebildet sind, wobei sich der ebenfalls halbzylindrisch ausgebildete untere Teil der länglichen Nuten koaxial zu der Freisparung erstreckt.

4. Passivstrahlungsdetektor nach einem der Ansprüche 1 bis 3, dadurch gekennzeichnet, daß der Bodenteil (7) des Gehäuses mit einer Auflage (41) versehen ist, auf der das Substrat bei geschlossenem Deckel zu liegen kommt.

5. Passivstrahlungsdetektor nach einem der Ansprüche 1 bis 4, dadurch gekennzeichnet, daß die den festen Sitz des Substrats sowie dessen Strahlungsexponierung gewährleistenden Mittel einen Gleitschlitz (27) für den Einschub des Substrats aufweisen, der parallel zur Innenseite (22) des Deckels und in Ausrichtung mit einem darin angeordneten Stahleneintrittsfenster (26) ausgebildet ist.

6. Passivstrahlungsdetektor nach einem der Ansprüche 1 bis 5, dadurch gekennzeichnet, daß die Mittel (26, 27) mindestens ein Polarisationselement (30) aufweisen.

7. Passivstrahlungsdetektor nach einem der Ansprüche 1 bis 6, dadurch gekennzeichnet, daß zwischen dem Deckel und dem im Unterteil ausgebildeten Gehäuse Mittel zur Festlegung des Deckels in dessen Schließlage vorgesehen sind.

8. Passivstrahlungsdetektor nach einem der Ansprüche 1 bis 7, dadurch gekennzeichnet, daß der Deckel folgende Teile aufweist:
- Eine den Deckel in zwei im wesentlichen gleichgroße Abschnitte unterteilende querverlaufende Faltzone (52), wobei die beiden Abschnitte so übereinandergelegt werden können, daß die strahlungsempfindliche Schicht eingeschlossen ist,
- eine auf der Innenseite (22) des Deckels und gleichermaßen wie das entnehmbare Substrat von der Faltlinie beabstandete Auflage (54), und
- Mittel (23, 53) zum Verriegeln der in ihrer geschlossenen Stellung übereinanderliegenden Deckelabschnitte.

9. Passivstrahlungsdetektor nach einem der Ansprüche 1 bis 8, dadurch gekennzeichnet, daß die Deckelinnenseite einen Bereich (50) zur Identifizierung und zum Anbringen einer Kennzeichnung aufweist.
